(19) Europäisches Patentamt

European Patent Office

Office européen des brevets

(11) **EP 1 236 292 B1**

(12) **EUROPÄISCHE PATENTSCHRIFT**

(45) Veröffentlichungstag und Bekanntmachung des Hinweises auf die Patenterteilung:
**26.04.2006 Patentblatt 2006/17**

(21) Anmeldenummer: **00988645.8**

(22) Anmeldetag: **24.11.2000**

(51) Int Cl.:
*H04B 7/26* (2006.01)    *H04Q 7/38* (2006.01)

(86) Internationale Anmeldenummer:
**PCT/DE2000/004177**

(87) Internationale Veröffentlichungsnummer:
**WO 2001/039397 (31.05.2001 Gazette 2001/22)**

(54) **VERFAHREN ZUM ABBILDEN VON FORMATKENNUNGS-BITS AUF EINEN IN EINEM KOMPRIMIERMODUS ZU SENDENDEN RAHMEN**

METHOD FOR REPRESENTING FORMAT INDICATOR BITS IN A FRAME TO BE SENT IN COMPRESSED MODE

PROCEDE PERMETTANT DE REPRESENTER DES BITS D'IDENTIFICATION DE FORMAT SUR UNE TRAME DEVANT ETRE ENVOYEE EN MODE COMPRIME

(84) Benannte Vertragsstaaten:
**DE FR GB IT**

(30) Priorität: **24.11.1999 DE 19956492**

(43) Veröffentlichungstag der Anmeldung:
**04.09.2002 Patentblatt 2002/36**

(73) Patentinhaber: **SIEMENS AKTIENGESELLSCHAFT 80333 München (DE)**

(72) Erfinder:
• **SENNINGER, Christian 82515 Wolfratshausen (DE)**
• **RAAF, Bernhard 81475 München (DE)**

(56) Entgegenhaltungen:
• **"Multiplexing and channel coding (FDD)" 3G TS 25 212 VERSION 3.0.0, Oktober 1999 (1999-10), Seiten 37-50, XP002163232**

EP 1 236 292 B1

## Beschreibung

Die vorliegende Erfindung betrifft ein Verfahren zum Abbilden von Formatkennungs-Bits, d.h. sogenannten TFCI-Bits, auf einen zu sendenden Rahmen, insbesondere auf einen im sogenannten "Compressed Mode" zu übertragenden komprimierten Rahmen, nach dem Oberbegriff des Anspruches 1 oder 24.

Die Mobilfunktechnik befindet sich in einer raschen Entwicklung. Augenblicklich wird an der Standardisierung des sogenannten UMTS-Mobilfunkstandards ('Universal Mobile Telecommunication System') für Mobilfunkgeräte der dritten Mobilfunkgeneration gearbeitet.

Über einen Mobilfunkkanal zu übertragende Informationen werden üblicherweise in Form einer vordefinierten Rahmen- und Zeitschlitzstruktur übertragen. Ein UMTS-Rahmen ("Frame") umfaßt 15 Zeitschlitze ("Slots"), wobei innerhalb jedes Rahmens neben den eigentlichen Daten auch bestimmte Systeminformationen übertragen werden. Diese Systeminformationen umfassen insbesondere eine bekannte Pilotbitfolge oder Trainingssequenz, die von dem jeweiligen Empfänger zur Schätzung der Kanalimpulsantwort des jeweiligen Mobilfunkkanals verwendet werden kann, eine Leistungsregelungsinformation in Form eines oder mehrerer TPC-Bits ("Transmit Power Control"), durch deren Inhalt die Sendeleistung des jeweiligen Empfängers gesteuert wird, sowie eine Formatkennungsinformation in Form von sogenannten TFCI-Bits ("Transport Format Combination Indicator").

Gemäß dem derzeitigen Stand der UMTS-Standardisierung ist für jeden UMTS-Rahmen ein TFCI-Codewort vorgesehen, welches aus zehn zunächst uncodierten Bits besteht, die anschließend mit einem (32,10)-Subcode des Reed-Muller-Codes zweiter Ordnung codiert und somit auf insgesamt 32 Bits abgebildet werden. Von diesen 32 Bits werden anschließend im Normalmodus (im normalen Betrieb bzw im Nicht-Komprimier-Modus) die Bits Nr. 0 und Nr. 16 punktiert, so daß das TFCI-Codewort nur noch 30 TFCI-Bits umfaßt, die dann gleichmäßig mit jeweils zwei TFCI-Bits auf die einzelnen Zeitschlitze des entsprechenden UMTS-Rahmens abgebildet oder verteilt werden. Dabei erfolgt die Zuordnung derart, daß die beiden höherwertigsten TFCI-Bits des TFCI-Codeworts auf den innerhalb des UMTS-Rahmens zuerst gesendeten Zeitschlitz Nr. 0 und die beiden niederwertigsten Bits auf den innerhalb des Rahmens zuletzt gesendeten Zeitschlitz Nr. 14 aufgeteilt werden. Innerhalb der einzelnen Zeitschlitze wird dann das höherwertigere TFCI-Bit vor dem niederwertigeren TFCI-Bit gesendet. Die Abbildung oder Zuordnung der TFCI-Bits des TFCI-Codeworts auf die einzelnen Zeitschlitze eines Rahmens wird auch als "Mapping" bezeichnet.

Unter "Punktierung" versteht man im Rahmen der vorliegenden Anmeldung auch das Entfernen bzw. Nicht-Senden bestimmter Bits, insbesondere auch der letzten Bits eines Codeworts.

Neben einer normalen Übertragung der Informationen in unkomprimierter Form ist für die Datenübertragung auch ein komprimierter Modus ("Compressed Mode") vorgesehen. Im "Compressed Mode" werden die Informationen des jeweiligen Rahmens in komprimierter Form übertragen, um auf diese Weise künstlich eine Übertragungslücke ("Transmission Gap") zu erzeugen, während deren Dauer die Abwesenheit von gesendeten Informationen beispielsweise für Zwischenfrequenzmessungen zur Vorbereitung von Handover-Vorgängen etc. genutzt werden kann.

Im "Compressed Mode" müssen pro Rahmen noch mindestens acht Zeitschlitze übrig bleiben. Die 30 TFCI-Bits müssen im "Compressed Mode" demzufolge auf die verbleibenden Zeitschlitze verteilt werden. Um dies zu ermöglichen, muß das Zeitschlitz-Format des Uplink-Kontrollkanals DPCCH ("Dedicated Physical Control Channel") und des Downlink-Kontrollkanals DPCCH sowie des Downlink-Datenkanals DPDCH ("Dedicated Physical Data Channel") angepaßt werden.

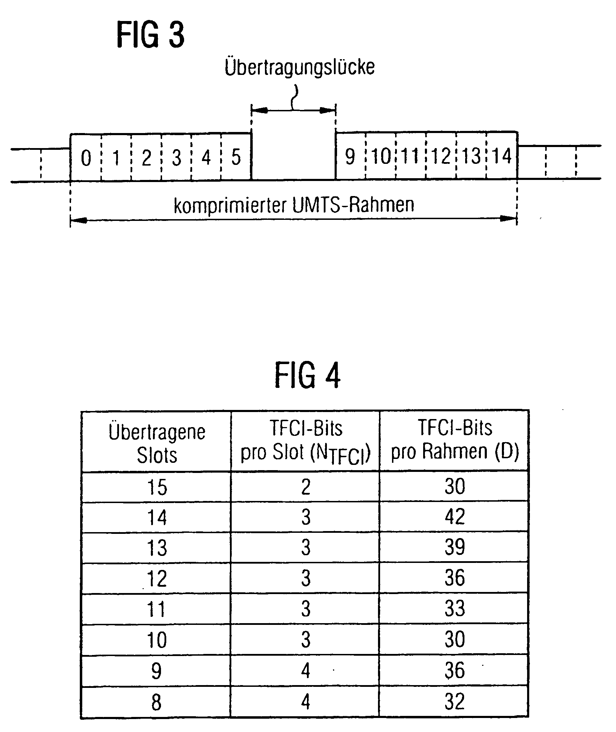

Für den Uplink-DPCCH-Kontrollkanal wurden diesbezüglich verschiedene Zeitschlitzformate für den "Compressed Mode" vorgeschlagen, die durch die in Fig. 4 gezeigte Tabelle zusammengefaßt werden können, wobei jeweils für eine unterschiedliche Anzahl der im "Compressed Mode" pro Rahmen übertragenen Zeitschlitze oder Slots die Anzahl $N_{TFCI}$ der pro Zeitschlitz übertragenen TFCI-Bits und die Gesamtanzahl D der pro Rahmen übertragenen TFCI-Bits angegeben ist.

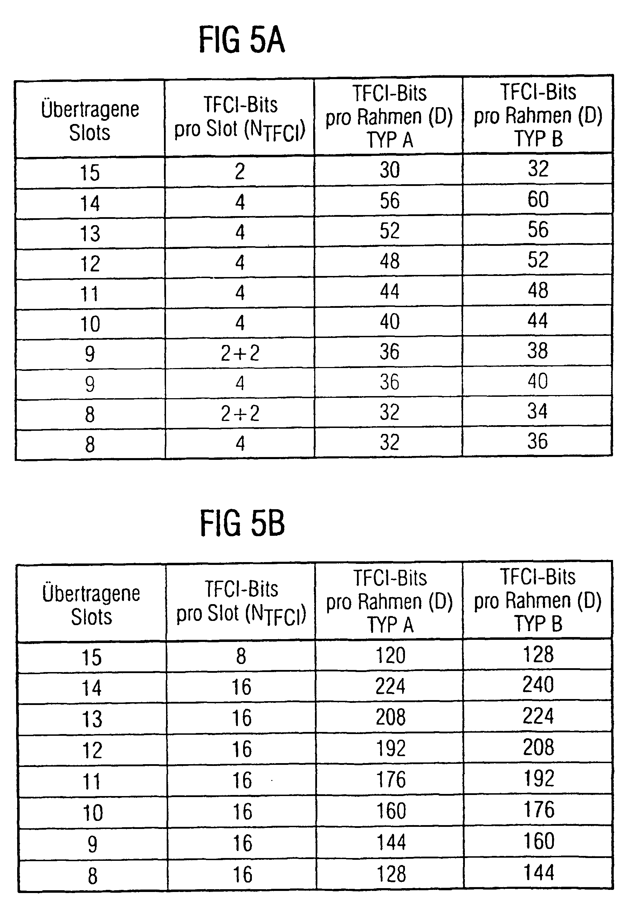

Auch für den Downlink wurden entsprechende Vorschläge für Zeitschlitzformate im "Compressed Mode" gemacht, die durch die in Fig. 5A und Fig. 5B gezeigten Tabellen zusammengefaßt werden können, wobei sich Fig. 5A auf einen für die entsprechenden Kanalisierungs- oder Spreizcodes ("Channelization Codes") verwendeten Spreizfaktor zwischen 128 und 512 bezieht, während Fig. 5B Spreizfaktoren zwischen 4 und 64 betrifft. In jeder dieser Tabellen ist analog zu Fig. 4 jeweils für eine unterschiedliche Anzahl der im "Compressed Mode" pro Rahmen übertragenen Zeitschlitze oder Slots die Anzahl $N_{TFCI}$ der pro Zeitschlitz übertragenen TFCI-Bits und die Gesamtanzahl D der pro Rahmen übertragenen TFCI-Bits angegeben, wobei in diesem Fall zudem zwischen einer Typ A- und einer Typ B-Übertragung unterschieden wird.

Da pro Rahmen ein einheitliches Zeitschlitzformat angestrebt ist, können - wie in Fig. 4 und Fig. 5A/B durch die einzelnen Werte für D dargestellt ist - Fälle auftreten, bei denen pro Rahmen mehr TFCI-Stellen zur Verfügung stehen als eigentlich für die 30 TFCI-Bits benötigt werden.

Für den Uplink, d.h. die Übertragung von einem Mobilteil zu einer Basisstation, wurde daher vorgeschlagen, ausgewählte TFCI-Bits im "Compressed Mode" zu repetieren, d.h. zu wiederholen, um die überschüssigen TFCI-Stellen aufzufüllen, wobei hierzu insbesondere die unmittelbar nach der im "Compressed Mode" auftretenden Übertragungslücke gesendeten Bits an freien TFCI-Stellen wiederholt werden, um das Repetieren möglichst effektiv zu gestalten. Der Grund hierfür beruht auf der Tatsache, daß die Sendeleistungsregelung unmittelbar nach der Übertragungslücke sehr unsicher ist, so daß unmittelbar nach der Übertragungslücke die Wahrscheinlichkeit für eine gestörte Übertragung am größten ist und daher diese Bits nach Möglichkeit wiederholt werden sollten. Die repetierten Bits können dabei durch folgenden Algorithmus bestimmt werden, wobei $c_k$ die TFCI-Bits, $d_k$ die repetierten Bits, D die Anzahl der im Rahmen insgesamt zur Verfügung stehenden TFCI-Stellen und E den Index bzw. die Position der im "Compressed Mode" auf die Übertragungslücke unmittelbar folgenden TFCI-Stelle bezeichnet:

$$d_{D-31} = c_{E \bmod 30}$$
$$d_{D-32} = c_{(E-1) \bmod 30}$$
$$d_{D-33} = c_{(E-2) \bmod 30}$$
$$\cdot$$
$$\cdot$$
$$\cdot$$
$$d_0 = c_{(E-(D-31)) \bmod 30}$$

Die Bits werden in absteigender Reihenfolge auf die einzelnen Zeitschlitze des komprimierten Rahmens aufgeteilt, wobei zunächst die TFCI-Bits $c_k$ und anschließend die repetierten Bits $d_k$ übertragen werden , d.h. das Bit $c_{29}$ ("Most Significant Bit" (MSB) des TFCI-Codeworts) wird als erstes Bit des TFCI-Codeworts übertragen, während $d_0$ als letztes Bit des TFCI-Codeworts übertragen wird.

Für den Downlink, d.h. die Übertragung von einer Basisstation zu einem Mobilteil, wurde hingegen vorgeschlagen, im "Compressed Mode" die freien oder überschüssigen TFCI-Stellen mit sogenannten DTX-Bits (Discontinuous Transmission Bits) aufzufüllen. Ein DTX-Bit entspricht dabei einem Bit, welches nicht gesendet wird, d.h. einem Bit mit der Energie Null. Somit wird an den entsprechenden Stellen der betroffenen Zeitschlitze jeweils eine Sendepause mit der zeitlichen Länge eines DTX-Bits eingelegt.

Der vorliegenden Erfindung liegt ausgehend von dem zuvor beschriebenen Stand der Technik die Aufgabe zugrunde, ein Verfahren zum Abbilden von TFCI-Bits auf einen in einem Komprimiermodus zu sendenden Rahmen vorzuschlagen, womit ohne zusätzlichen Aufwand die Übertragungsleistung und Übertragungssicherheit verbessert werden kann.

Diese Aufgabe wird erfindungsgemäß durch die Merkmale der unabhängigen Ansprüche gelöst. Die Unteransprüche definieren jeweils vorteilhafte und bevorzugte Ausführungsformen der vorliegenden Erfindung.

Für den Uplink und/oder Downlink wird gemäß einem ersten Ausführungsbeispiel der vorliegenden Erfindung vorgeschlagen, die überschüssigen TFCI-Stellen zuerst mit den ehemals oder ursprünglich punktierten Bits zu besetzen und erst dann die noch verbleibenden freien TFCI-Stellen durch Repetieren auszufüllen. Diesem Ausführungsbeispiel liegt die Erkenntnis zugrunde, daß es besser ist, die ehemals punktierten TFCI-Bits zu senden, als Bits zu repetieren, die hinsichtlich der Leistungsregelung ("Power Control") unter schlechten Bedingungen gesendet wurden.

Die ursprünglich punktierten Bits können beispielsweise am Ende des im "Compressed Mode" zu sendenden Rahmens gesendet werden.

Ebenso können die ursprünglich punktierten Bits auch direkt nach der im "Compressed Moden auftretenden Übertragungslücke gesendet werden. Diese Vorgehensweise besitzt den Vorteil, daß auf den wegen der Übertragungslücke "schlechten" TFCI-Stellen Bits gesendet werden, welche normalerweise ohnehin punktiert werden. Die dann immer noch unbelegten TFCI-Stellen können durch Repetieren der der Übertragungslücke unmittelbar folgenden TFCI-Bits belegt werden.

Eine Ausführungsvariante sieht vor, die überschüssigen TFCI-Stellen durch Repetieren der der Übertragungslücke folgenden TFCI-Bits zu besetzen, wobei jedoch diese TFCI-Bits in umgekehrter Reihenfolge repetiert werden. Diese Vorgehensweise ist sinnvoll, da davon ausgegangen werden kann, daß die TFCI-Bits, welche nach der Übertragungslücke gesendet werden, mit zunehmendem Abstand zu der Übertragungslücke eine geringere Bitfehlerrate aufweisen. Aus diesem Grund ist es besser, diejenigen TFCI-Bits, welche aufgrund ihrer Näher zu der Übertragungslücke die größte Bitfehlerrate aufweisen, in einem Zeitschlitz zu repetieren, der die größte Entfernung zu der Übertragungslücke besitzt.

Für den Downlink wird mit einem zusätzlichen Ausführungsbeispiel darüber hinaus vorgeschlagen, die im "Compressed Mode" überschüssigen TFCI-Stellen mit DTX-Bits, d.h. nicht zu sendenden Bits der Energie Null, aufzufüllen, wobei die der Übertragungslücke unmittelbar folgenden TFCI-Stellen zumindest teilweise mit DTX-Bits belegt werden. Diesbezüglich ist insbesondere auch denkbar, die DTX-Bits teilweise auf die Zeitschlitze vor der Übertragungslücke und teilweise auf die der Übertragungslücke folgenden Zeitschlitze aufzuteilen.

Gemäß einem weiteren für den Uplink und/oder Downlink vorgesehenen Ausführungsbeispiel wird vorgeschlagen, daß die Formatkennungs-Bits im Komprimiermodus auf eine bestimmte Anzahl an in dem entsprechenden komprimierten Rahmen zur Verfügung stehende Formatkennungs-Stellen abgebildet werden, und daß im Komprimiermodus sämtliche Formatkennungs-Bits des ursprünglichen Formatkennungs-Codeworts einschließlich der normalerweise (im Normalmodus bzw. Nicht-Komprimier-Modus) punktierten Formatkennungs-Bits auf entsprechende Formatkennungs-Stellen des komprimierten Rahmens abgebildet werden. Dabei kann im "Compressed Mode" das ursprüngliche TFCI-Codewort unpunktiert und daher die ursprünglichen TFCI-Bits in der ursprünglichen Reihenfolge gesendet werden, da ohnehin mehr TFCI-Stellen als punktierte TFCI-Bits zur Verfügung stehen. Insbesondere können alle 32 Bits in ihrer ursprünglichen Reihenfolge insbesondere derart abgebildet werden, daß die beiden nur im Komprimiermodus nicht punktierten Formatkennnungs-Bits auf die den belegten 30 Formatkennungs-Stellen unmittelbar folgenden Formatkennungs-Stellen abgebildet werden. Die dann immer noch überschüssigen TFCI-Stellen können durch Repetieren aufgefüllt werden.

Die vorliegende Erfindung bzw. Ausführungsbeispiele der vorliegenden Erfindung beruhen auch auf der Erkenntnis, daß im "Compressed Mode" die Leistungsregelung ("Power Control") durch die Übertragungslücke gestört wird und sich erst mit zunehmender Entfernung von der Übertragungslücke einschwingt. Aufgrund dieser Tatsache wird das Auffüllen von zusätzlichen TFCI-Stellen mit TFCI-Bits (im Uplink und/oder Downlink) oder DTX-Bits (im Downlink) optimiert. Darüber hinaus beruht die vorliegende Erfindung bzw. Ausführungsbeispiele der vorliegenden Erfindung auf der Erkenntnis, daß es besser ist, die ehemals punktierten TFCI-Bits zu senden, als TFCI-Bits zu repetieren, welche unter schlechten "Power Control"-Bedingungen gesendet wurden.

Die Erfindung wird nachfolgend näher anhand bevorzugter Ausführungsbeispiele unter Bezugnahme auf die beigefügte Zeichnung erläutert.

Fig. 1 zeigt ein vereinfachtes Blockschaltbil.d einer Anordnung zum Codieren, Punktieren und Abbilden von TFCI-Bits auf einen im sogenannten "Compressed Mode" zu sendenden UMTS-Rahmen, welche in einer erfindungsgemäßen Sendevorrichtung eingesetzt werden kann,

Fig. 2 zeigt eine Darstellung zur Verdeutlichung der Abbildung der TFCI-Bits auf einen UMTS-Rahmen,

Fig. 3 zeigt eine Darstellung zur Erläuterung verschiedener den "Compressed Mode" betreffenden Ausführungsbeispiele der vorliegenden Erfindung,

Fig. 4 zeigt eine Tabelle, in der verschiedene bekannte Zeitschlitzformate für einen im "Compressed Mode" über eine Uplink-Verbindung übertragenen UMTS-Rahmen aufgelistet sind, und

Fig. 5A und 5B zeigen Tabellen, in denen verschiedene bekannte Zeitschlitzformate für einen im "Compressed Mode" über eine Downlink-Verbindung übertragenen UMTS-Rahmen aufgelistet sind.

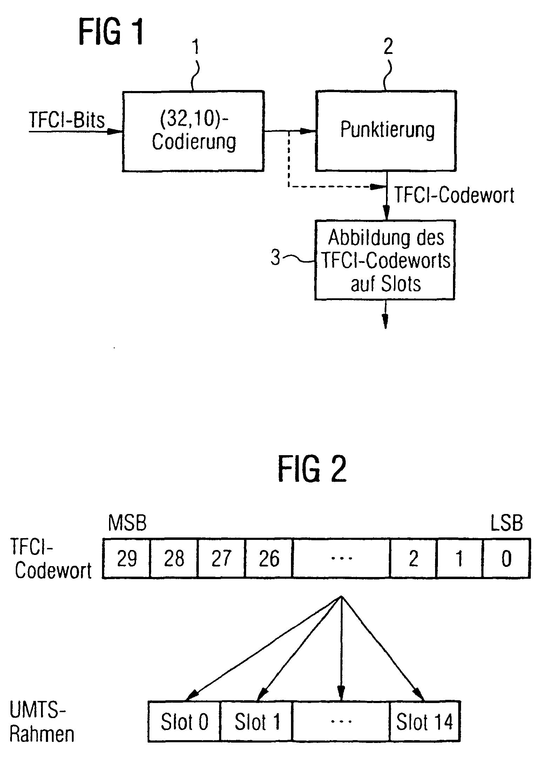

Bevor auf die verschiedenen erfindungsgemäßen Ausführungsbeispiele näher eingegangen wird, soll zunächst der grundlegende Aufbau einer Anordnung zum Abbilden von TFCI-Bits auf einen UMTS-Rahmen anhand Fig. 1 erläutert werden.

Einem (32,10)-Codierer 1 werden uncodierte TFCI-Bits zugeführt, welche auf den jeweiligen UMTS-Rahmen abzubilden sind. Die Anzahl der uncodierten TFCI-Bits ist im Prinzip variabel und wird zu Beginn einer Verbindung durch eine entsprechende Signalisierung festgelegt. Sind jedoch weniger als zehn uncodierte TFCI-Bits vorhanden, wird das entsprechende TFCI-Wort mit Nullen auf insgesamt zehn Bits aufgefüllt, wobei in diesem Fall die höherwertigeren Bits auf Null gesetzt werden. Auf diese Weise ist sichergestellt, daß dem (32,10)-Codierer 1 stets ein TFCI-Wort mit zehn TFCI-Bits zugeführt wird.

Der (32,10)-Codierer 1 codiert das ihm zugeführte TFCI-Wort unter Anwendung eines (32, 10)-Subcodes des sogenannten Reed-Muller-Codes zweiter Ordnung. Die Struktur des entsprechenden (32,10)-Codierers 1 ist dabei derart, daß das von dem (32,10)-Codierer 1 ausgegebene TFCI-Codewort durch eine durch die uncodierten TFCI-Bits gesteuerte Linearkombination von zehn unterschiedlichen Basissequenzen gebildet wird.

Das von dem (32,10)-Codierer 1 ausgegebene TFCI-Codewort, welches nunmehr 32 Bits umfaßt, wird anschließend einer Punktiereinheit 2 zugeführt, in der das Bit Nr. 0 und das Bit Nr. 16 punktiert, d.h. aus dem TFCI-Codewort entfernt werden. Das daraus resultierende punktierte TFCI-Codewort umfaßt somit nur noch 30 TFCI-Bits.

Die 30 TFCI-Bits werden einer Einheit 3 zugeführt, deren Aufgabe es ist, diese Bits im "Normal Mode" (d.h. bei unkomprimierter Übertragung) oder im "Compressed Mode" (d.h. bei komprimierter Übertragung) den einzelnen Zeitschlitzen oder Slots des jeweiligen UMTS-Rahmens zuzuweisen (vgl. Fig. 2).

Wie bereits beschrieben worden ist, werden die 30 TFCI-Bits im "Normal Mode" gleichmäßig auf die 15 Zeitschlitze des jeweiligen UMTS-Rahmens aufgeteilt, wobei die beiden höchstwertigen TFCI-Bits Nr. 29 und Nr. 28 auf den zeitlich zuerst gesendeten Zeitschlitz Nr. 0 abgebildet werden, während die beiden niederwertigsten Bits Nr. 1 und Nr. 0 auf den innerhalb des Rahmens zuletzt gesendeten Zeitschlitz Nr. 14 abgebildet werden.

Natürlich lässt sich exakt die selbe Konfiguration an zu sendenden TFCI Bits auch auf andere Weise erziehlen. Beispielsweise ist die Nummerierung der Bits eine reine Frage der Konvention, MSB und LSB könnten auch in einer anderen Reihenfolge definiert werden. Des weiteren müssen die Punktierungen nicht die Bits Nr. 0 und 16 betreffen sondern es können auch andere Bits punktiert werden. Gemäß einer weiteren Darstellungsweise können die Elemente der für den Reed-Mueller Kode verwendeten Masken auch umsortiert werden, so dass die zu punktierenden Bits an beliebige Stellen, insbesondere auch ans Ende des TFCI-Codewortes gesetzt werden können,. Alle diese alternativen, äquivalenten Darstellungsformen liegen ebenfalls im Rahmen der vorliegenden Erfindung, auch wenn sie im folgenden nicht explizit erwähnt werden.

Im "Compressed Mode" entsteht jedoch, wie in Fig. 3 gezeigt ist, in dem entsprechenden Rahmen eine Übertragungslücke, in der keine Informationen gesendet werden. Bei dem in Fig. 3 gezeigten Beispiel umfaßt diese Übertragungslücke die Zeitschlitze Nr. 6-8. Daraus resultiert, wie bereits beschrieben worden ist, das Erfordernis, das Zeitschlitzformat entsprechend anzupassen, was zur Folge hat, daß bei bestimmten dieser angepaßten Formate mehr TFCI-Stellen als TFCI-Bits zur Verfügung stehen (vgl. auch Fig. 4 und Fig. SA/SB).

Nachfolgend werden sowohl für den Uplink als auch für den Downlink verschiedene Möglichkeiten für das Auffüllen dieser überschüssigen TFCI-Stellen vorgeschlagen, wobei die nachfolgend für den Uplink vorgeschlagenen Ausführungsbeispiele auch für den Downlink anwendbar sind. Zudem können die einzelnen Ausführungsbeispiele auch miteinander kombiniert werden.

Im Folgenden werden zunächst einige Ausführungsbeispiele der vorliegenden Erfindung für den Uplink erläutert.

Gemäß einem ersten Ausführungsbeispiel wird für den Fall, daß im "Compressed Mode" mehr TFCI-Stellen als TFCI-Bits zur Verfügung stehen, vorgeschlagen, die überschüssigen TFCI-Bits nicht sofort durch Repetieren zu besetzen, sondern die noch nicht besetzten TFCI-Stellen zunächst mit den von der Punktiereinheit 2 ursprünglich punktierten Bits Nr. 0 und Nr. 16 des ursprünglichen TFCI-Codeworts zu besetzen. Diese beiden Bits werden vorzugsweise an das Ende des entsprechenden UMTS-Rahmens gesetzt. Erst nachdem diese Bits auf den UMTS-Rahmen abgebildet worden sind, werden die dann noch verbleibenden freien TFCI-Stellen durch Repetieren aufgefüllt, wobei dies analog zum eingangs beschriebenen Stand der Technik derart erfolgt, daß die 30 Bits des TFCI-Codeworts auf die zeitlich zuerst gesendeten TFCI-Stellen abgebildet werden, während die repetierten Bits den späteren TFCI-Stellen des Rahmens zugeordnet werden.

Durch diese Vorgehensweise verändert sich der zuvor vorgestellte Algorithmus für die Bestimmung der zusätzlichen TFCI-Bits $d_k$ wie folgt, wobei E den Index der der Übertragungslücke unmittelbar folgende TFCI-Stelle, $c_k$ mit k = 0...29 die 30 TFCI-Bits des punktierten TFCI-Codeworts, $c_{30}$ und $c_{31}$ die beiden ursprünglich punktierten Bits Nr. 0 und Nr. 16 des von dem Codierer 1 ausgegebenen TFCI-Codeworts und D die Anzahl der TFCI-Stellen im gesamten Rahmen bezeichnet:

$$d_{D-31} = c_{E \bmod 30}$$
$$d_{D-32} = c_{(E-1) \bmod 30}$$
$$d_{D-33} = c_{(E-2) \bmod 30}$$
$$\vdots$$
$$d_2 = c_{(E-(D-33)) \bmod 30}$$
$$d_1 = c_{31}$$
$$d_0 = c_{30}$$

Bei dem in Fig. 3 gezeigten Beispiel ergibt sich für die Abbildung der TFCI-Bits auf den jeweiligen Rahmen folgende Vorgehensweise. Da die Übertragungslücke drei Zeitschlitze umfaßt, werden lediglich zwölf Zeitschlitze gesendet, so daß gemäß der in Fig. 4 gezeigten Tabelle drei TFCI-Bits pro Zeitschlitz und insgesamt 36 TFCI-Bits in dem gesamten Rahmen übertragen werden sollen.

Gemäß dem zuvor beschriebenen Algorithmus werden zunächst die TFCI-Bits $c_{29}$ bis $C_{12}$ auf die ersten Zeitschlitze Nr. 0 bis Nr. 5 und die TFCI-Bits $c_{11}$ bis $c_0$ auf die nächsten Zeitschlitze Nr. 9 bis Nr. 12 verteilt. Nachdem somit alle TFCI-Bits des punktierten TFCI-Codeworts aufgeteilt worden sind, werden die TFCI-Bits $c_{11}$, $c_{10}$, $c_{09}$ im Zeitschlitz Nr. 13 repetiert und die ursprünglich punktierten TFCI-Bits $c_{30}$ und $c_{31}$ auf den letzten Zeitschlitz Nr. 14 abgebildet sowie das TFCI-Bit $c_{08}$ im Zeitschlitz Nr. 14 repetiert.

Diese Vorgehensweise ist vorteilhaft, da es besser ist, die ehemals punktierten Bits des TFCI-(32, 10)-Codeworts zu senden, als Bits zu repetieren, welche aufgrund der im "Compressed Mode" vorhandenen Übertragungslücke unter hinsichtlich der Leistungsregelung ("Power Control") schlechten Bedingungen gesendet wurden.

Das oben beschriebene Ausführungsbeispiel kann auch derart abgewandelt werden, daß die ursprünglich punktierten Bits nicht im letzten Zeitschlitz des UMTS-Rahmens plaziert werden, sondern direkt nach der Übertragungslücke gesendet werden. Zudem werden wie beim Stand der Technik die dann der Übertragungslücke unmittelbar folgenden TFCI-Bits repetiert. Diese Vorgehensweise besitzt den Vorteil, daß die Bits, welche normalerweise ohnehin punktiert werden, auf den bezüglich der Übertragungsbedingungen "schlechten" TFCI-Stellen gesendet werden.

Gemäß diesem Ausführungsbeispiel würden ausgehend von dem im Fig. 3 gezeigten Beispiel zunächst die TFCI-Bits $c_{29}$ bis $c_{12}$ auf die ersten Zeitschlitze Nr. 0 bis Nr. 5 verteilt werden. Die TFCI-Stellen des Zeitschlitzes Nr. 9 werden mit den ursprünglich punktierten Bits $c_{30}$ und $c_{31}$ sowie dem TFCI-Bit $c_{11}$ besetzt. Die TFCI-Bits $c_{10}$ bis $c_2$ werden den Zeitschlitzen Nr. 10 bis 12 zugewiesen. Der Zeitschlitz Nr. 13 wird durch die

TFCI-Bits $c_{01}$ und $c_0$ besetzt. Die dann immer noch zur Verfügung stehenden TFCI-Stellen in den Zeitschlitzen Nr. 13 und Nr. 14 werden, wie bereits beschrieben worden ist, durch die der Übertragungslücke unmittelbar folgenden TFCI-Bits besetzt, so daß das Bit $c_{30}$ im Zeitschlitz Nr. 13 und die Bits $c_{31}$, $c_{11}$, $c_{10}$ im Zeitschlitz Nr. 14 repetiert werden.

Es ist zu erwarten, daß die nach der Übertragungslücke gesendeten TFCI-Bits mit zunehmender Entfernung von der Übertragungslücke eine geringere Bitfehlerrate aufweisen, da sich die Leistungsregelung mit zunehmender Entfernung zu der Übertragungslücke wieder einschwingen kann. Eine weitere gute Möglichkeit für die Belegung der zur Verfügung stehenden TFCI-Stellen im "Compressed Mode" besteht daher darin, die unmittelbar nach der Übertragungslücke gesendeten TFCI-Bits, welche die größte Fehlerwahrscheinlichkeit aufweisen, in demjenigen Zeitschlitz zu repetieren, der die größte Entfernung zu der Übertragungslücke aufweist. Es ist somit vorteilhaft, die der Übertragungslücke unmittelbar folgenden TFCI-Bits in umgekehrter Reihenfolge (und nicht wie bisher in derselben Reihenfolge) zu repetieren.

Der eingangs beschriebene Algorithmus für die Bestimmung der repetierten Bits $d_k$ ändert sich dadurch folgendermaßen:

$$d_{D-31} = c_{(E-(D-31))\,\text{mod}\,30}$$
$$d_{D-32} = c_{(E-(D-32))\,\text{mod}\,30}$$
$$d_{D-33} = c_{(E-(D-33))\,\text{mod}\,30}$$
$$\cdot$$
$$\cdot$$
$$\cdot$$
$$d_1 = c_{(E-1)\,\text{mod}\,30}$$
$$d_0 = c_{E\,\text{mod}\,30}$$

Dies bedeutet für das in Fig. 3 gezeigte Beispiel, daß zunächst die TFCI-Bits $c_{29}$ bis $c_{12}$ auf die ersten Zeitschlitze Nr. 0 bis Nr. 5 und die TFCI-Bits $c_{11}$ bis $c_0$ auf die nächsten Zeitschlitze Nr. 9 bis Nr. 12 verteilt werden. Nachdem somit alle TFCI-Bits des punktierten TFCI-Codeworts aufgeteilt worden sind, werden die der Übertragungslücke dann unmittelbar folgenden TFCI-Bits in umgekehrter Reihenfolge repetiert, um die noch freien TFCI-Stellen zu besetzen, d.h. die TFCI-Bits $c_{06}$, $c_{07}$, $c_{08}$ werden im Zeitschlitz Nr. 13 und die TFCI-Bits $c_{09}$, $c_{10}$, $c_{11}$ werden im Zeitschlitz Nr. 14 repetiert.

Besonders vorteilhaft ist die Kombination dieses Ausführungsbeispiels mit dem ersten Ausführungsbeispiel, d.h. die beiden ursprünglich punktierten TFCI-Bits $c_{30}$ und $c_{31}$ werden im letzten Zeitschlitz gesendet, während die der Übertragungslücke unmittelbar folgenden TFCI-Bits zur Belegung der freien TFCI-Stellen in umgekehrter Reihenfolge repetiert werden. Für die Bestimmung der Belegung der TFCI-Stellen $d_k$ ergibt sich demnach folgender Algorithmus:

$$d_{D-31} = c_{(E-(D-33))\,\text{mod}\,30}$$
$$d_{D-32} = c_{(E-(D-34))\,\text{mod}\,30}$$
$$\cdot$$
$$\cdot$$
$$\cdot$$
$$d_2 = c_{E\,\text{mod}\,30}$$
$$d_1 = c_{31}$$
$$d_0 = c_{30}$$

Für das in Fig. 3 gezeigte Beispiel bedeutet dies, daß zunächst die TFCI-Bits $c_{29}$ bis $c_{12}$ auf die ersten Zeitschlitze Nr. 0 bis Nr. 5 und die TFCI-Bits $c_{11}$ bis $c_0$ auf die nächsten Zeitschlitze Nr. 9 bis Nr. 12 verteilt werden. Nachdem somit alle TFCI-Bits des punktierten TFCI-Codeworts aufgeteilt worden sind, werden die der Übertragungslücke dann unmittelbar folgenden TFCI-Bits in umgekehrter Reihenfolge repetiert und die ursprünglich punktierten Bits $c_{30}$ und $c_{31}$ im letzten Zeitschlitz gesendet, um die noch freien TFCI-Stellen zu besetzen, d.h. die TFCI-Bits $c_{08}$, $c_{09}$, $c_{10}$ werden im Zeitschlitz Nr. 13 repetiert, während dem Zeitschlitz Nr. 14 die ursprünglich punktierten TFCI-Hits $c_{30}$ und $c_{31}$ sowie das repetierte TFCI-Bit $c_{11}$ zugewiesen werden.

Wie bereits beschrieben worden ist, werden im "Compressed Mode" üblicherweise die TFCI-Bits des zweifach punktierten TFCI-(32,10)-Codeworts auf die ersten TFCI-Stellen des jeweiligen Rahmens verteilt, während die dann noch zur Verfügung stehenden TFCI-Stellen durch Repetieren aufgefüllt werden. Stehen in Abhängigkeit von dem für den "Compressed Mode" jeweils gewählten Format (vgl. Fig. 4) mindestens 32 TFCI-Stellen zur Verfügung, besteht eine weitere Möglichkeit zum Belegen der TFCI-Stellen darin, gleich das gesamte unpunktierte (32,10)-Codewort zu senden und erst dann, falls noch TFCI-Stellen frei sind, diese durch Repetieren aufzufüllen. In diesem Fall würde das von dem Codierer 1 gelieferte TFCI-Codewort seine ursprüngliche Länge und Reihenfolge beibehalten, da - wie in Fig. 1 gestrichelt angedeutet ist - die Punktierung entfällt.

Für das in Fig. 3 gezeigte Beispiel bedeutet dies, daß zunächst die TFCI-Bits $c_{30}$ bis $c_{15}$, $c_{31}$ und $c_{14}$ auf die ersten Zeitschlitze Nr. 0 bis Nr. 5 und die TFCI-Bits $c_{13}$ bis $c_{02}$ auf die nächsten Zeitschlitze Nr. 9 bis Nr. 12 verteilt werden. Dabei ist zu beachten, daß $c_{30}$ das Bit Nr. 0 und $c_{31}$ das Bit Nr. 16 des von dem Codierer 1 ausgegebenen unpunktierten TFCI-Codeworts bezeichnet (in Fig. 2 ist lediglich das punktierte TFCI-Codewort dargestellt). Im Zeitschlitz Nr. 13 werden zunächst die noch verbleibenden TFCI-Bits $c_{01}$ und $c_0$ gesendet. Die dann noch freien TFCI-Stellen des Zeitschlitzes Nr. 13 und des Zeitschlitzes Nr. 14 werden durch Repetieren belegt, wobei für das Repetieren wieder die zuvor beschriebenen Ausführungsbeispiele angewendet werden können. Im vorliegenden Fall werden wieder die der Übertragungslücke unmittelbar folgenden TFCI-Bits repetiert, so daß im Zeitschlitz Nr. 13 das TFCI-Bit $c_{13}$ repetiert wird, während im Zeitschlitz Nr. 14 die TFCI-Bits $c_{12}$ bis $c_{10}$ repetiert werden.

Im Folgenden werden zunächst Ausführungsbeispiele der vorliegenden Erfindung für die Belegung der im "Compressed Mode" zur Verfügung stehenden TFCI-Stellen für den Downlink erläutert.

Wie zuvor erläutert worden ist, können hierzu sogenannte DTX-Bits verwendet werden.

Im Rahmen der vorliegenden Erfindung wird nunmehr vorgeschlagen, diese DTX-Bits nicht am Ende des jeweiligen Rahmens auf die nach dem Senden des punktierten TFCI-Codeworts überschüssigen TFCI-Stellen zu verteilen, sondern diese DTX-Bits unmittelbar nach der im "Compressed Mode" auftretenden Übertragungslücke zu senden. D.h. es werden unmittelbar nach der Übertragungslücke so viele DTX-Bits gesendet, wie überschüssige TFCI-Stellen in dem Rahmen vorhanden sind. Die restlichen TFCI-Stellen des Rahmens werden mit den Bits des punktierten TFCI-Codeworts belegt.

Diese Vorgehensweise weist den Vorteil auf, daß die DTX-Bits für diejenigen TFCI-Stellen verwendet werden, für welche die Wahrscheinlichkeit einer gestörten Übertragung aufgrund ihrer Nähe zu der Übertragungslücke am größten ist.

Wird, wie in Fig. 3 gezeigt ist, ein Rahmen mit einer drei Zeitschlitze umfassenden Übertragungslücke übertragen, bedeutet dies (beispielhaften für einen Spreizfaktor von 256) gemäß der in Fig. 5A gezeigten Tabelle, daß pro Zeitschlitz vier TFCI-Stellen zur Verfügung stehen (die Downlink-Rahmenstruktur soll vom Typ A sein). Gemäß dem zuvor beschriebenen Ausführungsbeispiel werden demnach die TFCI-Bits $c_{29}$ bis $c_{06}$ des punktierten TFCI-Codeworts auf die Zeitschlitze Nr. 0 bis Nr. 5 verteilt. In den Zeitschlitzen Nr. 9 bis Nr. 12 werden 16 DTX-Bits gesendet, während im Zeitschlitz Nr. 13 zunächst zwei DTX-Bits und anschließend die TFCI-Bits $c_{05}$ und $c_{04}$ gesendet werden. Im letzten Zeitschlitz Nr. 14 werden schließlich die restlichen TFCI-Bits $c_{03}$ bis $c_0$ des punktierten TFCI-Codeworts gesendet.

Sollten nach der Übertragungslücke weniger Zeitschlitze vorhanden sein als man für die DTX-Bits benötigt, können die nicht nach der Übertragungslücke übertragbaren DTX-Bits den Zeitschlitzen vor der Übertragungslücke zugeordnet werden. Dabei kann die Verteilung im Prinzip beliebig erfolgen, wobei eine möglichst gleichmäßige Verteilung der DTX-Bits vorteilhaft ist. Als weitere Ausführungsvariante kann auch lediglich ein Teil der DTX-Bits unmittelbar nach der Übertragungslücke eingefügt werden, wobei die restlichen DTX-Bits auf die übrigen Zeitschlitze vor und nach der Übertragungslücke aufgeteilt werden. Dies ist insbesondere dann vorteilhaft, wenn nach der Übertragungslücke mehr Zeitschlitze zur Verfügung stehen, als für das Einschwingen der Leistungsregelung ("Power Control") erforderlich ist.

Eine spezielle Ausführungsvariante der Erfindung sieht vor, daß im Komprimiermodus zunächst 30 Bits des TFCI-Codeworts auf den zu sendenden Rahmen abgebildet werden. Außerdem werden zwei ursprünglich punktierte Bits bzw. zwei im Normalmodus (im normalen Betrieb bzw im Nicht-Komprimier-Modus) nicht zu sendende Bits auf den zu sendenen Rahmen abgebildet. Überschreitet insbesondere im Uplink die Anzahl der in dem entsprechenden komprimierten Rahmen zur Verfügung stehenden Formatkennungs-Stellen die Grenze von 32 Formatkennungs-Stellen, so werden TFCI-Bits wiederholt auf den zu sendenden Rahmen abgebildet; insbesondere werden die TFCI-Bits, welche kurz nach der Übertragungslücke gesendet werden, wiederholt auf den zu sendenden Rahmen abgebildet werden (repetiert werden). Diese wiederholte Abbildung findet dabei insbesondere in relativ zur ersten Abbildung dieser TFCI-Bits umgekehrter Reihenfolge statt.

Überschreitet insbesondere im Downlink die Anzahl der in dem entsprechenden komprimierten Rahmen zur Verfügung stehenden Formatkennungs-Stellen die Grenze von 32 Formatkennungs-Stellen, so werden wiederholt DTX-Bits auf den zu sendenden Rahmen abgebildet.

Abschließend sei nochmals darauf hingewiesen, daß die zuvor anhand des Uplinks beschriebenen Ausführungsbeispiele grundsätzlich auch auf den Downlink anwendbar sind. Des weiteren wurde die vorliegende Erfindung zuvor anhand der Verwendung in einem Mobilfunksender beschrieben. Selbstverständlich kann die Erfindung jedoch auch auf Mobilfunkempfänger ausgedehnt werden, welche zum Empfangen und Auswerten entsprechend eines erfindungsgemäß verarbeiteten und anschließend gesendeten Signals auszugestalten sind.

**Patentansprüche**

1. Verfahren zum Abbilden von Formatkennungs-Bits auf einen in einem Komprimiermodus zu sendenden Rahmen,
   wobei die innerhalb eines im Komprimiermodus zu sendenden Rahmens enthaltenen Informationen derart zeitlich komprimiert gesendet werden, dass innerhalb dieses komprimierten Rahmens eine nicht mit Informationen belegte Übertragungslücke vorhanden ist,
   wobei die Formatkennungs-Bits durch Punktieren eines entsprechenden Formatkennungs-Codeworts gewonnen werden, wodurch mindestens ein punktiertes Formatkennungs-Bit aus dem Formatkennungs-Codewort entfernt wird,
   wobei die Formatkennungs-Bits im Komprimiermodus auf eine bestimmte Anzahl an in dem entsprechenden komprimierten Rahmen zur Verfügung stehende Formatkennungs-Stellen abgebildet werden, welche größer als die Anzahl der Formatkennungs-Bits ist, und
wobei beim Abbilden der Formatkennungs-Bits auf die Formatkennungs-Stellen mindestens ein Formatkennungs-Bit wiederholt abgebildet wird, um sämtliche Formatkennungs-Stellen mit einem Formatkennungs-Bit zu belegen,
**dadurch gekennzeichnet,**
**dass** im Komprimiermodus auch die ursprünglich punktierten Formatkennungs-Bits auf entsprechende Formatkennungs-Stellen des komprimierten Rahmens abgebildet werden.

2. Verfahren nach Anspruch 1,
**dadurch gekennzeichnet**,

a) dass zunächst die Formatkennungs-Bits auf entsprechende Formatkennungs-Stellen des komprimierten Rahmens abgebildet werden,
b) dass die ursprünglich punktierten Formatkennungs-Bits auf nach dem Schritt a) noch unbelegte Formatkennungs-Stellen abgebildet werden, und
c) dass mindestens ein Formatkennungs-Bit wiederholt abgebildet wird, um nach den Schritten a) und b) noch unbelegte Formatkennungs-Stellen zu belegen.

3. Verfahren nach Anspruch 2,
**dadurch gekennzeichnet,**
**dass** im Schritt a) die Formatkennungs-Bits auf die zeitlich zuerst zu sendenden Formatkennungs-Stellen des komprimierten Rahmens abgebildet werden.

4. Verfahren nach Anspruch 3,
**dadurch gekennzeichnet,**
**dass** im Schritt a) die Formatkennungs-Bits entsprechend ihrer Wertigkeit auf die zeitlich zuerst zu sendenden Formatkennungs-Stellen des komprimierten Rahmens abgebildet werden, wobei das höherwertigste Formatkennungs-Bit auf die zeitlich zuerst zu sendende Formatkennungs-Stelle abgebildet wird.

5. Verfahren nach einem der Ansprüche 2-4,
**dadurch gekennzeichnet,**
**dass** im Schritt c) genau so viele im Schritt a) bereits zuvor abgebildete Formatkennungs-Bits jeweils einmal wiederholt auf eine entsprechende, nach den Schritten a) und b) noch unbelegte Formatkennungs-Stelle abgebildet werden, wie es zum Belegen dieser Formatkennungs-Stellen erforderlich ist.

6. Verfahren Anspruch 5,
**dadurch gekennzeichnet,**
**dass** bei der im Schritt c) durchgeführten wiederholten Abbildung die einzelnen Formatkennungs-Bits in umgekehrter Reihenfolge zu Schritt a) auf die entsprechenden Formatkennungs-Stellen abgebildet werden.

7. Verfahren nach einem der Ansprüche 2-6,
**dadurch gekennzeichnet,**
**dass** im Schritt b) die ursprünglich punktierten Formatkennungs-Bits auf am Ende des komprimierten Rahmens vorhandene Formatkennungs-Stellen abgebildet werden.

8. Verfahren nach Anspruch 7,
**dadurch gekennzeichnet,**
**dass** im Schritt b) die ursprünglich punktierten Formatkennungs-Bits auf in einem letzten Zeitschlitz des komprimierten Rahmens vorhandene Formatkennungs-Stellen abgebildet werden.

9. Verfahren nach Anspruch 1,
**dadurch gekennzeichnet,**
**dass** die ursprünglich punktierten Formatkennungs-Bits auf der Übertragungslücke des komprimierten Rahmens unmittelbar folgende Formatkennungs-Stellen abgebildet werden.

10. Verfahren nach Anspruch 9,
**dadurch gekennzeichnet,**
**dass** die ursprünglich punktierten Formatkennungs-Bits auf Formatkennungs-Stellen abgebildet werden, welche in einem der Übertragungslücke unmittelbar folgenden Zeitschlitz des komprimierten Rahmens vorhanden sind.

11. Verfahren nach Anspruch 9 oder 10,
**dadurch gekennzeichnet**,

a) dass zunächst die Formatkennungs-Bits auf Formatkennungs-Stellen vor der Übertragungslücke des komprimierten Rahmens abgebildet werden,
b) dass die ursprünglich punktierten Formatkennungs-Bits auf der Übertragungslücke des komprimierten Rahmens unmittelbar folgende Formatkennungs-Stellen abgebildet werden,
c) dass die nach dem Schritt a) noch verbleibenden Formatkennungs-Bits auf nach den Schritten a) und b) noch unbelegte Formatkennungs-Stellen abgebildet werden, und
d) dass mindestens ein in den Schritten a)-c) bereits abgebildetes Formatkennungs-Bit wiederholt abgebildet wird, um nach den Schritten a)-c) noch unbelegte Formatkennungs-Stellen zu belegen.

12. Verfahren nach Anspruch 11,
**dadurch gekennzeichnet,**
**dass** die Formatkennungs-Bits entsprechend ihrer Wertigkeit auf die entsprechenden Formatkennungs-Stellen des komprimierten Rahmens abgebildet werden, wobei das höherwertigste Formatkennungs-Bit auf eine Formatkennungs-Stelle abgebildet wird, welche zeitlich vor der dem niederwertigsten Formatkennungs-Bit zugeordneten Formatkennungs-Stelle gesendet wird.

13. Verfahren nach Anspruch 10 oder 11,
    **dadurch gekennzeichnet,**
    **dass** bei der im Schritt d) durchgeführten wiederholten Abbildung die einzelnen Formatkennungs-Bits in umgekehrter Reihenfolge zu den Schritten a)-c) auf die entsprechenden Formatkennungs-Stellen abgebildet werden.

14. Verfahren nach einem der vorhergehenden Ansprüche,
    **dadurch gekennzeichnet,**
    **dass** das Formatkennungs-Codewort 32 Formatkennungs-Bits umfaßt, wobei durch das Punktieren zwei punktierte Formatkennungs-Bits aus dem Formatkennungs-Codewort entfernt werden.

15. Verfahren nach einem der vorhergehenden Ansprüche,
    **dadurch gekennzeichnet,**
    **dass** das Verfahren vor dem Senden des komprimierten Rahmens über eine Uplink-Verbindung in einem Funksystem, insbesondere einem UMTS-Mobilfunksystem, durchgeführt wird.

16. Verfahren nach einem der Ansprüche 1-14,
    **dadurch gekennzeichnet,**
    **dass** das Verfahren vor dem Senden des komprimierten Rahmens über eine Downlink-Verbindung in einem Funksystem, insbesondere einem UMTS-Mobilfunksystem, durchgeführt wird.

17. Verfahren nach einem der vorhergehenden Ansprüche,
    **dadurch gekennzeichnet,**
    **dass** nach einem ersten Abbilden der Formatkennungs-Bits auf entsprechende Formatkennungs-Stellen die der Übertragungslücke folgenden Formatkennungs-Bits wiederholt abgebildet werden, um sämtliche Formatkennungs-Stellen mit einem Formatkennungs-Bit zu belegen, wobei nach dem ersten Abbilden der Formatkennungs-Bits die der Übertragungslücke folgenden Formatkennungs-Bits in umgekehrter Reihenfolge wiederholt abgebildet werden, um die nach dem ersten Abbilden noch unbelegten Formatkennungs-Stellen des komprimierten Rahmens mit einem Formatkennungs-Bit zu belegen.

18. Verfahren nach Anspruch 17,
    **dadurch gekennzeichnet,**
    **dass** während des ersten Abbildens die Formatkennungs-Bits auf die zeitlich zuerst zu sendenden Formatkennungs-Stellen des komprimierten Rahmens abgebildet werden.

19. Verfahren nach Anspruch 18,
    **dadurch gekennzeichnet,**
    **dass** während des ersten Abbildens die Formatkennungs-Bits entsprechend ihrer Wertigkeit auf die entsprechenden Formatkennungs-Stellen des komprimierten Rahmens abgebildet werden, wobei das höherwertigste Formatkennungs-Bit auf die zeitlich zuerst zu sendende Formatkennungs-Stelle des komprimierten Rahmens abgebildet wird.

20. Verfahren nach einem der vorhergehenden Ansprüche,
    **dadurch gekennzeichnet,**
    **dass** beim Abbilden der Formatkennungs-Bits auf die zur Verfügung stehenden Formatkennungs-Stellen mindestens einer Formatkennungs-Stelle ein nicht zu sendendes Bit (DTX-Bit) zugewiesen wird, um sämtliche Formatkennungs-Stellen mit einem Bit zu belegen, wobei die nicht zu sendenden Bits wenigstens teilweise den der Übertragungslücke unmittelbar folgenden Formatkennungs-Stellen zugewiesen werden.

21. Verfahren nach Anspruch 20,
    **dadurch gekennzeichnet,**
    **dass** so viele nicht zu sendenden Bits den der Übertragungslücke unmittelbar folgenden Formatkennungs-Stellen zugewiesen werden, wie die Anzahl der Formatkennungs-Bits kleiner als die Anzahl der zur Verfügung stehenden Formatkennungs-Stellen ist.

22. Verfahren nach Anspruch 20,
    **dadurch gekennzeichnet,**
    **dass** ein erster Teil der nicht zu sendenden Bits den der Übertragungslücke unmittelbar folgenden Formatkennungs-Stellen zugewiesen wird, während ein zweiter Teil der nicht zu sendenden Bits den der Übertragungslücke vorhergehenden und/oder folgenden Formatkennungs-Stellen zugewiesen wird.

23. Verfahren nach einem der Ansprüche 20 bis 22,
    **dadurch gekennzeichnet,**
    **dass** die Formatkennungs-Bits entsprechend ihrer Wertigkeit auf die entsprechenden Formatkennungs-Stellen des komprimierten Rahmens abgebildet werden, wobei das höherwertigste Formatkennungs-Bit auf die zeitlich zuerst zu sendende Formatkennungs-Stelle des komprimierten Rahmens abgebildet wird.

24. Verfahren zum Abbilden von Formatkennungs-Bits auf einen in einem Komprimiermodus zu sendenden Rahmen,
    wobei die innerhalb eines im Komprimiermodus zu sendenden Rahmens enthaltenen Informationen derart zeitlich komprimiert gesendet werden, daß innerhalb dieses komprimierten Rahmens eine nicht mit Informationen belegte Übertragungslücke vorhanden ist,
wobei die Formatkennungs-Bits im Komprimiermodus auf eine bestimmte Anzahl an in dem entsprechenden komprimierten Rahmen zur Verfügung stehende Formatkennungs-Stellen abgebildet werden, welche größer als die Anzahl der Formatkennungs-Bits ist, und
wobei beim Abbilden der Formatkennungs-Bits auf die Formatkennungs-Stellen mindestens ein Formatkennungs-Bit wiederholt abgebildet wird, um sämtliche Formatkennungs-Stellen mit einem Formatkennungs-Bit zu belegen,
**dadurch gekennzeichnet,**
**daß** im Komprimiermodus sämtliche Formatkennungs-Bits des ursprünglichen Formatkennungs-Codeworts einschließlich der in einem Normalmodus punktierten Formatkennungs-Bits auf entsprechende Formatkennungs-Stellen des komprimierten Rahmens abgebildet werden.

25. Verfahren nach Anspruch 24,
**dadurch gekennzeichnet**,

a) dass sämtliche Formatkennungs-Bits des ursprünglichen Formatkennungs-Codeworts einschließlich der normalerweise punktierten Formatkennungs-Bits jeweils einmal auf entsprechende Formatkennungs-Stellen des komprimierten Rahmens abgebildet werden, und
b) dass nach dem Schritt a) mindestens ein im Schritt a) bereits abgebildetes Formatkennungs-Bit wiederholt abgebildet wird, um die nach dem Schritt a) noch unbelegten Formatkennungs-Stellen mit einem Formatkennungs-Bit zu belegen.

26. Verfahren nach Anspruch 25,
**dadurch gekennzeichnet,**
**dass** im Schritt b) die nach der Durchführung des Schritts a) der Übertragungslücke folgenden Formatkennungs-Bits in umgekehrter Reihenfolge wiederholt abgebildet werden, um die nach dem ersten Abbilden noch unbelegten Formatkennungs-Stellen des komprimierten Rahmens mit einem Formatkennungs-Bit zu belegen.

27. Verfahren nach Anspruch 25 oder 26,
**dadurch gekennzeichnet,**
**dass** im Schritt a) die Formatkennungs-Bits entsprechend ihrer Wertigkeit auf die entsprechenden Formatkennungs-Stellen des komprimierten Rahmens abgebildet werden, wobei das höherwertigste Formatkennungs-Bit auf die zeitlich zuerst zu sendende Formatkennungs-Stelle des komprimierten Rahmens abgebildet wird.

28. Codiereinrichtung zum Abbilden von Formatkennungs-Bits auf einen in einem Komprimiermodus zu sendenden Rahmen, die derart eingerichtet ist,

- dass die innerhalb eines im Komprimiermodus zu sendenden Rahmens enthaltenen Informationen derart zeitlich komprimiert gesendet werden, dass innerhalb dieses komprimierten Rahmens eine nicht mit Informationen belegte Übertragungslücke vorhanden ist,
- dass die Formatkennungs-Bits durch Punktieren eines entsprechenden Formatkennungs-Codeworts gewonnen werden, wodurch mindestens ein punktiertes Formatkennungs-Bit aus dem Formatkennungs-Codewort entfernt wird,
- dass die Formatkennungs-Bits im Komprimiermodus auf eine bestimmte Anzahl an in dem entsprechenden komprimierten Rahmen zur Verfügung stehende Formatkennungs-Stellen abgebildet werden, welche größer als die Anzahl der Formatkennungs-Bits ist, und
- dass beim Abbilden der Formatkennungs-Bits auf die Formatkennungs-Stellen mindestens ein Formatkennungs-Bit wiederholt abgebildet wird, um sämtliche Formatkennungs-Stellen mit einem Formatkennungs-Bit zu belegen,

**dadurch gekennzeichnet,**

- **dass** im Komprimiermodus auch die ursprünglich punktierten Formatkennungs-Bits auf entsprechende Formatkennungs-Stellen des komprimierten Rahmens abgebildet werden.

29. Mobilfunkempfänger, der zum Empfangen und Auswerten eines Rahmens entsprechend zu einem verarbeiteten und anschließend gesendeten Rahmen gemäß einem der Ansprüche 1 bis 27 ausgestaltet ist.

30. Codiereinrichtung zum Abbilden von Formatkennungs-Bits auf einen in einem Komprimiermodus zu sendenden Rahmen, die derart eingerichtet ist,
daß die innerhalb eines im Komprimiermodus zu sendenden Rahmens enthaltenen Informationen derart zeitlich komprimiert gesendet werden, daß innerhalb dieses komprimierten Rahmens eine nicht mit Informationen belegte Übertragungslücke vorhanden ist,
daß die Formatkennungs-Bits im Komprimiermodus auf eine bestimmte Anzahl an in dem entsprechenden komprimierten Rahmen zur Verfügung stehende Formatkennungs-Stellen abgebildet werden, welche größer als die Anzahl der Formatkennungs-Bits ist, und
daß beim Abbilden der Formatkennungs-Bits auf die Formatkennungs-Stellen mindestens ein Formatkennungs-Bit wiederholt abgebildet wird, um sämtliche Formatkennungs-Stellen mit einem Formatkennungs-Bit zu belegen,
**dadurch gekennzeichnet,**
**daß** im Komprimiermodus sämtliche Formatkennungs-Bits des ursprünglichen Formatkennungs-Codeworts einschließlich der in einem Normalmodus punktierten Formatkennungs-Bits auf entsprechende Formatkennungs-Stellen des komprimierten Rahmens abgebildet werden.

**Claims**

1. Method for mapping format identification bits onto a frame which is to be transmitted using a compressed mode,
   with the information contained within a frame which is to be transmitted using the compressed mode being sent compressed in time such that there is a transmission gap, which is not filled with information, within this compressed frame,
   with the format identification bits being obtained by puncturing an appropriate format identification code word, by which means at least one punctured format identification bit is removed from the format identification code word,
   with the format identification bits in the compressed mode being mapped onto a specific number of format identification points which are available in the corresponding compressed frame, with this number being greater than the number of format identification bits, and
   with at least one format identification bit being mapped repeatedly during the mapping of the format identification bits onto the format identification points, in order to fill all the format identification points with a format identification bit,
   **characterized in that**, in the compressed mode, the originally punctured format identification bits are also mapped onto corresponding format identification points in the compressed frame.

2. Method according to Claim 1,
   **characterized**

   a) in that, first of all, the format identification bits are mapped onto corresponding format identification points in the compressed frame,
   b) in that the originally punctured format identification bits are mapped onto format identification points which are still unfilled after step a) and
   c) in that at least one format identification bit is mapped repeatedly in order to fill format identification points which are still unfilled after steps a) and b).

3. Method according to Claim 2,
   **characterized**
   **in that**, in step a), the format identification bits are mapped onto those format identification points in the compressed frame which are to be transmitted first in time.

4. Method according to Claim 3,
   **characterized**
   **in that**, in step a), the format identification bits are mapped in accordance with their significance onto those format identification points in the compressed frame which are to be transmitted first in time, with the most significant format identification bit being mapped onto that format identification point which is to be transmitted first in time.

5. Method according to one of Claims 2-4,
   **characterized**
   **in that**, in step c), exactly the same number of format identification bits which were previously mapped in step a) are mapped, in each case repeated once, onto a corresponding format identification point which is still unfilled after steps a) and b) is as required to fill these format identification points.

6. Method according to Claim 5,
   **characterized**
   **in that**, in the repeated mapping process which is carried out in step c), the individual format identification bits are mapped onto the corresponding format identification points in the reverse sequence to that in step a).

7. Method according to one of Claims 2-6,
   **characterized**
   **in that**, in step b), the originally punctured format identification bits are mapped onto format identification points at the end of the compressed frame.

8. Method according to Claim 7,
   **characterized**
   **in that**, in step b), the originally punctured format identification bits are mapped onto format identification points in a last time slot of the compressed frame.

9. Method according to Claim 1,
   **characterized**
   **in that** the originally punctured format identification bits are mapped onto format identification points which immediately follow the transmission gap in the compressed frame.

10. Method according to Claim 9,
    **characterized**
    **in that** the originally punctured format identification bits are mapped onto format identification points which are present in a time slot which immediately follows the transmission gap in the compressed frame.

11. Method according to Claim 9 or 10, **characterized**

a) in that, first of all, the format identification bits are mapped onto format identification points before the transmission gap in the compressed frame,
b) in that the originally punctured format identification bits are mapped onto format identification points which immediately follow the transmission gap in the compressed frame,
c) in that the format identification bits which still remain after step a) are mapped onto format identification points which are still unfilled after the steps a) and b), and
d) in that at least one format identification bit which has already been mapped in steps a) - c) is mapped repeatedly in order to fill format identification points which are still unfilled after steps a) - c).

12. Method according to Claim 11, **characterized** **in that** the format identification bits are mapped in accordance with their significance onto the corresponding format identification points in the compressed frame, with the most significant format identification bits being mapped onto a format identification point which is sent at a time before the format identification point associated with the least significant format identification bit.

13. Method according to Claim 10 or 11, **characterized** **in that**, in the repeated mapping process which is carried out in step d), the individual format identification bits are mapped onto the corresponding format identification points in the reverse sequence to that in steps a) - c).

14. Method according to one of the preceding claims, **characterized** **in that** the format identification code word comprises 32 format identification bits, with two punctured format identification bits being removed from the format identification code word by means of puncturing.

15. Method according to one of the preceding claims, **characterized** **in that** Method is carried out before sending the compressed frame via an uplink connection in a radio system, in particular a UMTS mobile radio system.

16. Method according to one of Claims 1-14, **characterized** **in that** Method is carried out before sending the compressed frame via a downlink connection in a radio system, in particular a UMTS mobile radio system.

17. Method according to one of the preceding claims, **characterized** **in that**, after a first mapping of the format identification bits onto corresponding format identification points, the format identification bits following the transmission gap are mapped repeatedly in order to fill all the format identification points with a format identification bit, with, after the first mapping of the format identification bits, the format identification bits following the transmission gap being mapped repeatedly in the reverse sequence, in order to fill those format identification points which are still unfilled in the compressed frame after the first mapping process with a format identification bit.

18. Method according to Claim 17, **characterized** **in that**, during the first mapping process, the format identification bits are mapped onto those format identification points in the compressed frame which are to be transmitted first in time.

19. Method according to Claim 18, **characterized** **in that**, during the first mapping process, the format identification bits are mapped in accordance with their significance onto the corresponding format identification points in the compressed frame, with the most significant format identification bit being mapped onto that format identification point which is to be transmitted first in time in the compressed frame.

20. Method according to one of the preceding claims, **characterized** **in that**, during the mapping of the format identification bits onto the available format identification points, at least one format identification point is assigned a bit (DTX bit) which is not to be transmitted, in order to fill all the format identification points with a bit, with at least some of the bits which are not to be transmitted being assigned to those format identification points which immediately follow the transmission gap.

21. Method according to Claim 20, **characterized** **in that** the same number of bits which are not to be transmitted are assigned to the format identification points which immediately follow the transmission gap as the number of available format identification points minus the number of format identification bits.

22. Method according to Claim 20,

**characterized**

**in that** a first portion of the bits which are not to be transmitted is assigned to the format identification points which immediately follow the transmission gap, while a second portion of the bits which are not to be transmitted is assigned to the format identification points which precede and/or follow the transmission gap.

23. Method according to one of Claims 20 to 22, **characterized**

**in that** the format identification bits are mapped in accordance with their significance onto the corresponding format identification points in the compressed frame, with the most significant format identification bit being mapped onto that format identification point which is to be transmitted first in time in the compressed frame.

24. Method for mapping format identification bits onto a frame to be transmitted using a compressed mode, with the information contained within a frame to be transmitted using the compressed mode being sent, compressed in time, such that there is a transmission gap, which is not filled with information, within this compressed frame, with the format identification bits in the compressed mode being mapped onto a specific number of format identification points which are available in the corresponding compressed frame, which number is greater than the number of format identification bits, and

with at least one format identification bit being mapped repeatedly during the mapping of the format identification bits onto the format identification points, in order to fill all the format identification points with a format identification bit,

**characterized**

**in that** in the compressed mode, all the format identification bits in the original format identification code word, including the format identification bits punctured in a normal mode, are mapped onto corresponding format identification points in the compressed frame.

25. Method according to Claim 24, **characterized**

a) in that all the format identification bits in the original format identification code word, including the normally punctured format identification bits, are each mapped once onto corresponding format identification points in the compressed frame, and

b) in that after step a) at least one format identification bit which has already been mapped in step a) is mapped repeatedly, in order to fill those format identification points which are still unfilled after step a) with a format identification bit.

26. Method according to Claim 25, **characterized**

**in that**, in step b), those format identification bits which follow the transmission gap after carrying out step a) are mapped repeatedly in the reverse sequence in order to fill those format identification points which are still unfilled after the first mapping process in the compressed frame with a format identification bit.

27. Method according to Claim 25 or 26, **characterized**

**in that**, in step a), the format identification bits are mapped in accordance with their significance onto the corresponding format identification points in the compressed frame, with the most significant format identification bit being mapped onto that format identification point which is to be transmitted first in time in the compressed frame.

28. Coding device for mapping format identification bits onto a frame which is to be transmitted using a compressed mode, which is set up such

- that the information contained within a frame which is to be transmitted using the compressed mode is sent compressed in time such that there is a transmission gap, which is not filled with information, within this compressed frame,
- that the format identification bits are obtained by puncturing an appropriate format identification code word, by which means at least one punctured format identification bit is removed from the format identification code word,
- that the format identification bits in the compressed mode are mapped onto a specific number of format identification points which are available in the corresponding compressed frame, with this number being greater than the number of format identification bits, and
- that at least one format identification bit is mapped repeatedly during the mapping of the format identification bits onto the format identification points, in order to fill all the format identification points with a format identification bit,

**characterized in that**, in the compressed mode, the originally punctured format identification bits are also mapped onto corresponding format identification points in the compressed frame.

29. Mobile radio receiver which is designed for reception and evaluation of a frame corresponding to a frame which is processed and is then sent according to one of Claims 1 to 27.

30. Coding device for mapping format identification bits onto a frame to be transmitted using a compressed mode, which is designed such that the information contained within a frame to be transmitted using the compressed mode is sent, compressed in time, such that there is a transmission gap, which is not filled with information, within this compressed frame, that the format identification bits in the compressed mode are mapped onto a specific number of format identification points which are available in the corresponding compressed frame, which number is greater than the number of format identification bits, and that at least one format identification bit is mapped repeatedly during the mapping of the format identification bits onto the format identification points, in order to fill all the format identification points with a format identification bit, **characterized in that** in the compressed mode, all the format identification bits in the original format identification code word, including the format identification bits punctured in a normal mode, are mapped onto corresponding format identification points in the compressed frame.

**Revendications**

1. Procédé permettant de représenter des bits d'identification de format sur une trame devant être envoyée dans un mode comprimé, les informations contenues à l'intérieur d'une trame devant être envoyée dans le mode comprimé étant envoyées comprimées temporellement de manière telle qu'il y a à l'intérieur de cette trame comprimée un intervalle de transmission non occupé par des informations, les bits d'identification de format étant obtenus par poinçonnage d'un mot de code d'identification de format correspondant, ce par quoi au moins un bit d'identification de format poinçonné est retiré du mot de code d'identification de format, les bits d'identification de format étant représentés, dans le mode comprimé, sur un nombre déterminé de positions d'identification de format disponibles dans la trame comprimée correspondante, lequel est supérieur au nombre des bits d'identification de format, et lors de la représentation des bits d'identification de format sur les positions d'identification de format, au moins un bit d'identification de format étant représenté de manière répétée pour occuper toutes les positions d'identification de format avec un bit d'identification de format, **caractérisé en ce que**, dans le mode comprimé, les bits d'identification de format poinçonnés initialement sont eux aussi représentés sur des positions d'identification de format correspondantes de la trame comprimée.

2. Procédé selon la revendication 1, **caractérisé en ce que**

   a) d'abord les bits d'identification de format sont représentés sur des positions d'identification de format correspondantes de la trame comprimée,
   b) les bits d'identification de format poinçonnés initialement sont représentés sur des positions d'identification de format encore non occupées après l'étape a) et
   c) au moins un bit d'identification de format est représenté de manière répétée pour occuper des positions d'identification de format encore non occupées après les étapes a) et b).

3. Procédé selon la revendication 2, **caractérisé en ce que**, à l'étape a), les bits d'identification de format sont représentés sur les positions d'identification de format de la trame comprimée qui doivent être envoyées en premier lieu dans le temps.

4. Procédé selon la revendication 3, **caractérisé en ce que**, à l'étape a), les bits d'identification de format sont représentés selon leur valeur sur les positions d'identification de format de la trame comprimée qui doivent être envoyées en premier lieu dans le temps, le bit d'identification de format de valeur la plus haute étant représenté sur la position d'identification de format devant être envoyée en premier lieu dans le temps.

5. Procédé selon l'une des revendications 2 à 4, **caractérisé en ce que**, à l'étape c), autant de bits d'identification de format déjà représentés auparavant à l'étape a) sont représentés chacun de manière répétée une fois sur une position d'identification de format correspondante, encore non occupée après les étapes a) et b), que cela est nécessaire pour occuper ces positions d'identification de format.

6. Procédé selon la revendication 5, **caractérisé en ce que**, dans la représentation répétée opérée à l'étape c), les bits d'identification de format individuels sont représentés dans l'ordre inverse à celui de l'étape a) sur les positions d'identification de format correspondantes.

7. Procédé selon l'une des revendications 2 à 6, **caractérisé en ce que**, à l'étape b), les bits d'identification de format poinçonnés initialement sont représentés sur des positions d'identification de format présentes à la fin de la trame comprimée.

8. Procédé selon la revendication 7, **caractérisé en ce que**, à l'étape b), les bits d'identification de format poinçonnés initialement sont représentés sur des positions d'identification de format présentes dans un dernier créneau temporel de la trame comprimée.

**9.** Procédé selon la revendication 1, **caractérisé en ce que** les bits d'identification de format poinçonnés initialement sont représentés sur des positions d'identification de format qui suivent directement l'intervalle de transmission de la trame comprimée.

**10.** Procédé selon la revendication 9, **caractérisé en ce que** les bits d'identification de format poinçonnés initialement sont représentés sur des positions d'identification de format qui sont présentes dans un créneau temporel de la trame comprimée, lequel suit directement l'intervalle de transmission.

**11.** Procédé selon la revendication 9 ou 10, **caractérisé en ce que**

a) d'abord les bits d'identification de format sont représentés sur des positions d'identification de format avant l'intervalle de transmission de la trame comprimée,
b) les bits d'identification de format poinçonnés initialement sont représentés sur des positions d'identification de format qui suivent directement l'intervalle de transmission de la trame comprimée
c) les bits d'identification de format encore restants après l'étape a) sont représentés sur des positions d'identification de format encore non occupées après les étapes a) et b) et
d) au moins un bit d'identification de format déjà représenté aux étapes a) à c) est représenté de manière répétée pour occuper des positions d'identification de format encore non occupées après les étapes a) à c).

**12.** Procédé selon la revendication 11, **caractérisé en ce que** les bits d'identification de format sont représentés selon leur valeur sur les positions d'identification de format correspondantes de la trame comprimée, le bit d'identification de format de valeur la plus haute étant représenté sur une position d'identification de format qui est envoyée temporellement avant la position d'identification de format associée au bit d'identification de format de valeur la plus faible.

**13.** Procédé selon la revendication 10 ou 11, **caractérisé en ce que**, lors de la représentation répétée opérée à l'étape d), les bits d'identification de format individuels sont représentés dans l'ordre inverse à celui des étapes a) à c) sur les positions d'identification de format correspondantes.

**14.** Procédé selon l'une des revendications précédentes, **caractérisé en ce que** le mot de code d'identification de format comprend 32 bits d'identification de format, deux bits d'identification de format poinçonnés étant retirés du mot de code d'identification de format par le poinçonnage.

**15.** Procédé selon l'une des revendications précédentes, **caractérisé en ce que** le procédé est exécuté avant l'envoi de la trame comprimée via une connexion uplink dans un système radio, en particulier un système radio mobile UMTS.

**16.** Procédé selon l'une des revendications 1 à 14, **caractérisé en ce que** le procédé est exécuté avant l'envoi de la trame comprimée via une connexion downlink dans un système radio, en particulier un système radio mobile UMTS.

**17.** Procédé selon l'une des revendications précédentes, **caractérisé en ce que**, après une première représentation des bits d'identification de format sur des positions d'identification de format correspondantes, les bits d'identification de format suivant l'intervalle de transmission sont représentés de manière répétée pour occuper toutes les positions d'identification de format avec un bit d'identification de format, les bits d'identification de format suivant l'intervalle de transmission étant représentés, après la première représentation des bits d'identification de format, de manière répétée, dans l'ordre inverse, pour occuper avec un bit d'identification de format les positions d'identification de format de la trame comprimée encore non occupées après la première représentation.

**18.** Procédé selon la revendication 17, **caractérisé en ce que**, pendant la première représentation, les bits d'identification de format sont représentés sur les positions d'identification de format de la trame comprimée qui doivent être envoyées en premier lieu dans le temps.

**19.** Procédé selon la revendication 18, **caractérisé en ce que**, pendant la première représentation, les bits d'identification de format sont représentés selon leur valeur sur les positions d'identification de format correspondantes de la trame comprimée, le bit d'identification de format de valeur la plus haute étant représenté sur la position d'identification de format de la trame comprimée qui doit être envoyée en premier lieu dans le temps.

**20.** Procédé selon l'une des revendications précédentes, **caractérisé en ce que**, lors de la représentation des bits d'identification de format sur les positions d'identification de format disponibles, un bit ne devant pas être envoyé (bit DTX) est affecté à au moins une position d'identification de format pour occuper toutes les positions d'identification de format avec un bit, les bits ne devant pas être envoyés étant affectés du moins en partie aux positions d'identification de format qui suivent directement l'intervalle de transmission.

**21.** Procédé selon la revendication 20, **caractérisé en ce qu'**autant de bits ne devant pas être envoyés sont affectés aux positions d'identification de format suivant directement l'intervalle de transmission que le nombre des bits d'identification de format disponibles est inférieur au nombre des positions d'identification de format.

**22.** Procédé selon la revendication 20, **caractérisé en ce qu'**une première partie des bits ne devant pas être envoyés est affectée aux positions d'identification de format suivant directement l'intervalle de transmission tandis qu'une deuxième partie des bits ne devant pas être envoyés est affectée aux positions d'identification de format précédant et/ou suivant l'intervalle de transmission.

**23.** Procédé selon l'une des revendications 20 à 22, **caractérisé en ce que** les bits d'identification de format sont représentés selon leur valeur sur les positions d'identification de format correspondantes de la trame comprimée, le bit d'identification de format de valeur la plus haute étant représenté sur la position d'identification de format de la trame comprimée qui doit être envoyée en premier lieu dans le temps.

**24.** Procédé de représentation de bits d'identification de format sur une trame devant être envoyée dans un mode comprimé, les informations contenues à l'intérieur d'une trame devant être envoyée dans le mode comprimé étant envoyées comprimées temporellement de manière telle qu'il y a un intervalle de transmission non occupé par des informations à l'intérieur de cette trame comprimée, les bits d'identification de format étant représentés, dans le mode comprimé, sur un nombre déterminé de positions d'identification de format disponibles dans la trame comprimée correspondante, lequel est supérieur au nombre des bits d'identification de format, et, lors de la représentation des bits d'identification de format sur les positions d'identification de format, au moins un bit d'identification de format étant représenté de manière répétée pour occuper toutes les positions d'identification de format avec un bit d'identification de format, **caractérisé en ce que**, dans le mode comprimé, tous les bits d'identification de format du mot de code initial d'identification de format, y compris les bits d'identification de format poinçonnés dans un mode normal, sont représentés sur des positions d'identification de format correspondantes de la trame comprimée.

**25.** Procédé selon la revendication 24, **caractérisé en ce que**

a) tous les bits d'identification de format du mot de code initial d'identification de format y compris les bits d'identification de format normalement poinçonnés sont représentés chacun une fois sur des positions d'identification de format correspondantes de la trame comprimée et
b) après l'étape a), au moins un bit d'identification de format déjà représenté à l'étape a) est représenté de manière répétée pour occuper avec un bit d'identification de format les positions d'identification de format encore non occupées après l'étape a).

**26.** Procédé selon la revendication 25, **caractérisé en ce que**, à l'étape b), les bits d'identification de format suivant l'intervalle de transmission après l'exécution de l'étape a) sont représentés de manière répétée, dans l'ordre inverse, pour occuper avec un bit d'identification de format les positions d'identification de format encore non occupées après la première représentation.

**27.** Procédé selon la revendication 25 ou 26, **caractérisé en ce que**, à l'étape a), les bits d'identification de format sont représentés selon leur valeur sur les positions d'identification de format correspondantes de la trame comprimée, le bit d'identification de format de valeur la plus haute étant représenté sur la position d'identification de format de la trame comprimée qui doit être envoyée en premier lieu dans le temps.

**28.** Dispositif de codage pour représenter des bits d'identification de format sur une trame devant être envoyée dans un mode comprimé, lequel est aménagé de manière telle que

- les informations contenues à l'intérieur d'une trame devant être envoyée dans le mode comprimé sont envoyées comprimées temporellement de manière telle qu'il y a un intervalle de transmission non occupé par des informations à l'intérieur de cette trame comprimée,
- les bits d'identification de format sont obtenus par poinçonnage d'un mot de code d'identification de format correspondant, ce par quoi au moins un bit d'identification de format poinçonné est retiré du mot de code d'identification de format,
- les bits d'identification de format sont représentés, dans le mode comprimé, sur un nombre déterminé de positions d'identification de format disponibles dans la trame comprimée correspondante, lequel est supérieur au nombre des bits d'identification de format, et
- lors de la représentation des bits d'identification de format sur les positions d'identification de format, au moins un bit d'identification de format est représenté de manière répétée pour occuper toutes les positions d'identification de format avec un bit d'identification de format,

**caractérisé en ce que**, dans le mode comprimé, les bits d'identification de format poinçonnés initialement sont eux aussi représentés sur des positions d'identification de format correspondantes de la trame comprimée.

29. Récepteur radio mobile réalisé pour recevoir et évaluer une trame conformément à une trame traitée et ensuite envoyée selon l'une des revendications 1 à 27.

30. Dispositif de codage pour représenter des bits d'identification de format sur une trame devant être envoyée dans un mode comprimé, lequel est aménagé de manière telle que

    - les informations contenues à l'intérieur d'une trame devant être envoyée dans le mode comprimé sont envoyées comprimées temporellement de manière telle qu'il y a un intervalle de transmission non occupé par des informations à l'intérieur de cette trame comprimée,
    - les bits d'identification de format sont représentés, dans le mode comprimé, sur un nombre déterminé de positions d'identification de format disponibles dans la trame comprimée correspondante, lequel est supérieur au nombre des bits d'identification de format, et
    - lors de la représentation des bits d'identification de format sur les positions d'identification de format, au moins un bit d'identification de format est représenté de manière répétée pour occuper toutes les positions d'identification de format avec un bit d'identification de format,

**caractérisé en ce que**, dans le mode comprimé, tous les bits d'identification de format du mot de code initial d'identification de format y compris les bits d'identification de format poinçonnés dans un mode normal sont représentés sur les positions d'identification de format correspondantes de la trame comprimée.

## FIG 1

TFCI-Bits →  (32,10)-Codierung [1] → Punktierung [2]

TFCI-Codewort

3 → Abbildung des TFCI-Codeworts auf Slots

## FIG 2

MSB                                                          LSB

TFCI-Codewort | 29 | 28 | 27 | 26 | ··· | 2 | 1 | 0 |

UMTS-Rahmen | Slot 0 | Slot 1 | ··· | Slot 14 |

# FIG 3

Übertragungslücke

| 0 | 1 | 2 | 3 | 4 | 5 | | 9 | 10 | 11 | 12 | 13 | 14 |

komprimierter UMTS-Rahmen

# FIG 4

| Übertragene Slots | TFCI-Bits pro Slot ($N_{TFCI}$) | TFCI-Bits pro Rahmen (D) |
|---|---|---|
| 15 | 2 | 30 |
| 14 | 3 | 42 |
| 13 | 3 | 39 |
| 12 | 3 | 36 |
| 11 | 3 | 33 |
| 10 | 3 | 30 |
| 9 | 4 | 36 |
| 8 | 4 | 32 |

## FIG 5A

| Übertragene Slots | TFCI-Bits pro Slot ($N_{TFCI}$) | TFCI-Bits pro Rahmen (D) TYP A | TFCI-Bits pro Rahmen (D) TYP B |
|---|---|---|---|
| 15 | 2 | 30 | 32 |
| 14 | 4 | 56 | 60 |
| 13 | 4 | 52 | 56 |
| 12 | 4 | 48 | 52 |
| 11 | 4 | 44 | 48 |
| 10 | 4 | 40 | 44 |
| 9 | 2+2 | 36 | 38 |
| 9 | 4 | 36 | 40 |
| 8 | 2+2 | 32 | 34 |
| 8 | 4 | 32 | 36 |

## FIG 5B

| Übertragene Slots | TFCI-Bits pro Slot ($N_{TFCI}$) | TFCI-Bits pro Rahmen (D) TYP A | TFCI-Bits pro Rahmen (D) TYP B |
|---|---|---|---|
| 15 | 8 | 120 | 128 |
| 14 | 16 | 224 | 240 |
| 13 | 16 | 208 | 224 |
| 12 | 16 | 192 | 208 |
| 11 | 16 | 176 | 192 |
| 10 | 16 | 160 | 176 |
| 9 | 16 | 144 | 160 |
| 8 | 16 | 128 | 144 |